(19) **Europäisches Patentamt / European Patent Office / Office européen des brevets**

(11) **EP 4 618 463 A1**

(12) **EUROPEAN PATENT APPLICATION**
published in accordance with Art. 153(4) EPC

(43) Date of publication:
**17.09.2025 Bulletin 2025/38**

(21) Application number: **23889001.6**

(22) Date of filing: **27.10.2023**

(51) International Patent Classification (IPC):
**H04L 5/00** (2006.01)  **H04W 72/21** (2023.01)
**H04L 1/08** (2006.01)  **H04L 1/18** (2023.01)
**H04W 72/12** (2023.01)

(52) Cooperative Patent Classification (CPC):
**H04L 1/08; H04L 1/18; H04L 5/00; H04W 72/12; H04W 72/21**

(86) International application number:
**PCT/KR2023/016870**

(87) International publication number:
**WO 2024/101739 (16.05.2024 Gazette 2024/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.11.2022 US 202263423072 P**
**02.12.2022 KR 20220166892**
**19.01.2023 KR 20230007806**
**16.02.2023 KR 20230020890**

(71) Applicant: **LG Electronics Inc.**
**Yeongdeungpo-gu**
**Seoul 07336 (KR)**

(72) Inventors:
• **PARK, Haewook**
**Seoul 06772 (KR)**
• **YANG, Suckchel**
**Seoul 06772 (KR)**
• **KIM, Hyungtae**
**Seoul 06772 (KR)**
• **KANG, Jiwon**
**Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **METHOD AND APPARATUS FOR TRANSMITTING AND RECEIVING SIGNAL IN WIRELESS COMMUNICATION SYSTEM**

(57) A method by which a terminal transmits a signal in a wireless communication system, according to at least one of embodiments disclosed in the present specification, comprises: receiving downlink control information (DCI) for uplink scheduling; and transmitting a physical uplink shared channel (PUSCH) on the basis of the DCI, wherein on the basis that the transmission of the PUSCH is related to a 8-transmission port and comprises a plurality of codewords (CWs), first uplink control information (UCI) is multiplexed on one of the plurality of CWs, the one CW on which the first UCI is multiplexed has the highest modulation and coding scheme (MCS) value from among the plurality of CWs, the highest MCS value is on the basis that the number of CWs is 2 or more, and thus, from among CWs having the highest MCS value, a CW having the lowest CW index may be determined as the one CW on which the first UCI is multiplexed.

**FIG. 15**

## Description

[Technical Field]

The present disclosure relates to a wireless communication system, and more particularly, to a method and apparatus for transmitting or receiving a downlink/uplink radio signal in a wireless communication system.

[Background Art]

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

[Disclosure]

[Technical Problem]

An object of the present disclosure is to provide a method of efficiently performing wireless signal transmission/reception procedures and an apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

[Technical Solution]

In one aspect, provided herein is a method of transmitting a signal by a terminal in a wireless communication system. The method may include receiving downlink control information (DCI) for uplink scheduling, and transmitting a physical uplink shared channel (PUSCH) based on the DCI. Based on the transmission of the PUSCH being related to an 8-transmission port and comprising a plurality of codewords (CWs), first uplink control information (UCI) may be multiplexed into one of the CWs. The one CW into which the first UCI is multiplexed may have a highest modulation and coding scheme (MCS) value among the CWs. Based on the number of CWs having the highest MCS value being greater than or equal to 2, a CW with a lowest CW index among the CWs having the highest MCS value may be determined as the one CW into which the first UCI is multiplexed.

The CWs may include a first CW having a first index and a second CW having a second index higher than the first index. Based on the first CW and the second CW having the same MCS value, the first UCI may be multiplexed into only the first CW.

The first UCI may include hybrid automatic repeat request-acknowledgment (HARQ-ACK), channel state information (CSI) part 1, and CSI part 2.

The second UCI different from the first UCI may be multiplexed into all the CWs.

In one example, the second UCI may include hybrid automatic repeat request-acknowledgment (HARQ-ACK). The HARQ-ACK may be repeatedly mapped on the plurality of CWs.

In one example, second UCI different from the first UCI may be multiplexed into all the CWs. The second UCI may include channel state information (CSI). The CSI may be mapped once over the plurality of CWs.

Based on the first UCI having a first priority value lower than a second priority value, the first UCI may be multiplexed into only the determined one CW.

Second UCI having the second priority value higher than the first priority value may be multiplexed into all the CWs.

The CWs may be enabled when a rank value is greater than 4.

A higher layer parameter for determining the number of UCI resource elements (REs) may be configured for each CW. The higher layer parameter may include at least one of an alpha parameter or a beta offset parameter for rate matching.

In another aspect, a processor-readable recording medium storing a program for executing the signal transmission method disclosed above may be provided.

In another aspect, a terminal for executing the signal transmission disclosed above may be provided.

In another aspect, a processing device for controlling a terminal for performing the above-described signal transmission may be provided.

In another aspect, provided herein is a method of receiving a signal by a base station in a wireless communication system. The method may include transmitting downlink control information (DCI) for uplink scheduling, and receiving a physical uplink shared channel (PUSCH) based on the DCI. Based on the reception of the PUSCH being related to an 8-transmission port and comprising a plurality of codewords (CWs), first uplink control information (UCI) may be de-multiplexed from one of the CWs. The one CW from which the first UCI is de-multiplexed may have a highest modulation and coding scheme (MCS) value among the CWs. Based on the number of CWs having the highest MCS value being greater than or equal to 2, a CW with a lowest CW index among the CWs having the highest MCS value may be determined as the one CW from which the first UCI is de-multiplexed.

In another aspect, a base station for performing the signal reception method described above may be provided.

[Advantageous Effects]

According to the present disclosure, wireless signal transmission and reception may be efficiently performed in a wireless communication system.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

[Description of Drawings]

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot.

FIG. 5 illustrates an exemplary PDSCH and acknowledgment/negative acknowledgment (ACK/NACK) transmission process.

FIG. 6 illustrates an exemplary PUSCH transmission process.

FIG. 7 illustrates an example of a channel state information (CSI) related procedure.

FIG. 8 illustrates a multi-TRP transmission.

FIG. 9 illustrates a method of mapping UCI onto PUSCH in an existing NR standard.

FIGS. 10 to 14 illustrate methods of mapping UCI onto PUSCH according to the proposals of the present disclosure.

FIG. 15 illustrates an example implementation of a method of operating a UE in a wireless communication system according to one embodiment of the present disclosure.

FIG. 16 illustrates an example implementation of a method of operating a BS in a wireless communication system according to one embodiment of the present disclosure.

FIGS. 17 to 20 illustrate a communication system 1 and wireless devices applicable to the present disclosure.

FIG. 21 illustrates a discontinuous reception (DRX) operation applicable to the present disclosure.

[Detailed Description]

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the present disclosure, for simplicity, this technology will be referred to as NR (New Radio or New RAT).

For the sake of clarity, 3GPP NR is mainly described, but the technical idea of the present disclosure is not limited thereto.

In the present disclosure, the term "set/setting" may be replaced with "configure/configuration", and both may be used interchangeably. Further, a conditional expression (e.g., "if", "in a case", or "when") may be replaced by "based on that" or "in a state/status". In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent invention or that each of them should be implemented only individually. Unless explicitly contradicting each other, it may be derived/understood that at least some of the sections, embodiments, examples, options, methods, schemes, and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

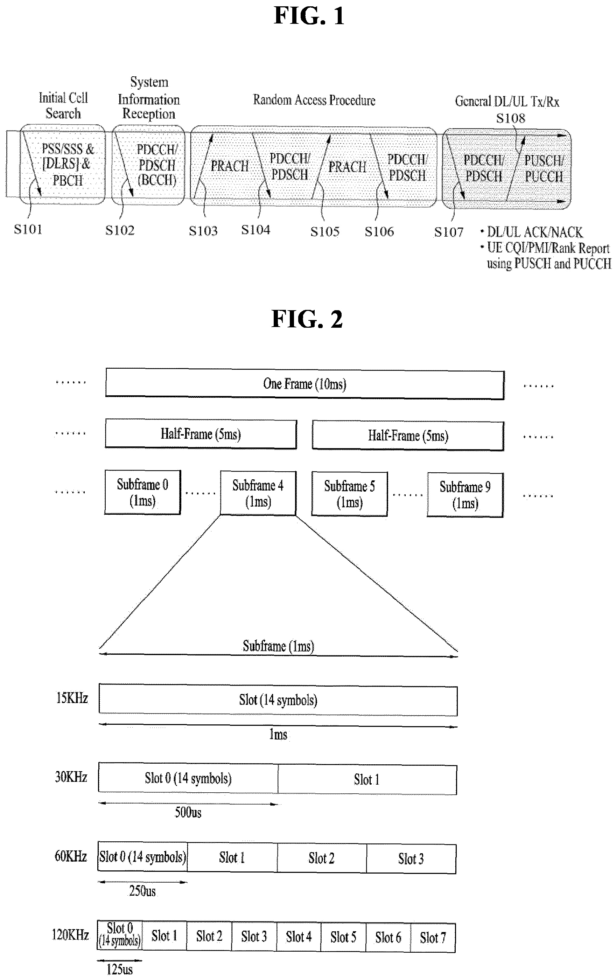

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subftame,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

$N^{slot}_{symb}$: Number of symbols in a slot
$N^{frame,u}_{slot}$: Number of slots in a frame
$N^{subftame,u}_{slot}$: Number of slots in a subframe

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

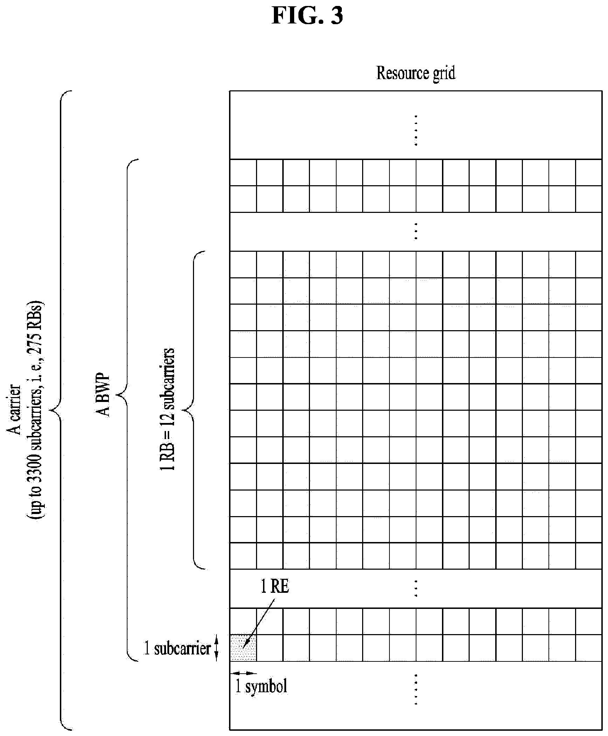

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

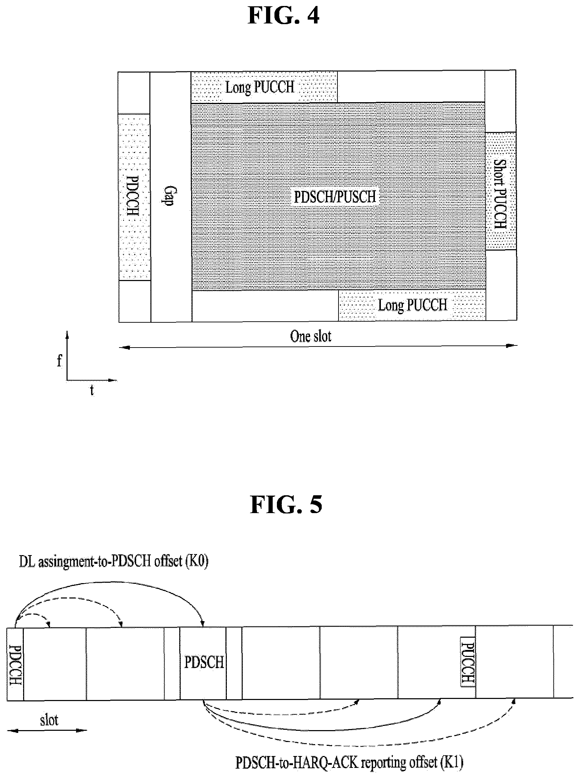

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured through higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters.

controlResourceSetId: A CORESET related to an SS.
monitoringSlotPeriodicityAndOffset: A PDCCH monitoring periodicity (in slots) and a PDCCH monitoring offset (in slots).
monitoringSymbolsWithinSlot: PDCCH monitoring symbols in a slot (e.g., the first symbol(s) of a CORESET).
nrofCandidates: The number of PDCCH candidates (one of 0, 1, 2, 3, 4, 5, 6, and 8) for each AL={1, 2, 4, 8, 16}.

An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |

(continued)

| DCI format | Usage |
|---|---|
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.

SR (Scheduling Request): Information used to request UL-SCH resources.

HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.

CSI (Channel State Information): Feedback information for a DL channel. Multiple input multiple output (MIMO)-related feedback information includes an RI and a PMI.

Table 5 illustrates exemplary PUCCH formats. PUCCH formats may be divided into short PUCCHs (Formats 0 and 2) and long PUCCHs (Formats 1, 3, and 4) based on PUCCH transmission durations.

[Table 5]

| PUCCH format | Length in OFDM PUCCH symbols $N_{\text{symb}}^{\text{PUCCH}}$ | Number of bits | Usage | Etc |
|---|---|---|---|---|
| 0 | 1-2 | $\leq 2$ | HARQ, SR | Sequence selection |
| 1 | 4-14 | $\leq 2$ | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM (no UE multiplexing) |
| 4 | 4-14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the UE transmits the PUCCH of PUCCH format 0 in PUCCH resources for a corresponding SR configuration.

PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).

PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.

At least one of one or two or more cells configured to the UE may be configured for PUCCH transmission. At least a primary cell may be set as a cell for the PUCCH transmission. At least one PUCCH cell group may be configured to the UE based on at least one cell where the PUCCH transmission is configured, and each PUCCH cell group includes one or two or more cells. A PUCCH cell group may be simply referred to as a PUCCH group. The PUCCH transmission may be configured not only in the primary cell but also in a secondary cell (Scell). The primary cell belongs to a primary PUCCH group, and the PUCCH-SCell where the PUCCH transmission is configured belongs to a secondary PUCCH group. For cells belonging to the primary PUCCH group, a PUCCH on the primary cell may be used. For cells belonging to the secondary PUCCH group, a PUCCH on the PUCCH-SCell may be used.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

FIG. 5 illustrates an exemplary ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.

Frequency domain resource assignment: Indicates an RB set assigned to a PDSCH.

Time domain resource assignment: Indicates K0 and the starting position (e.g., OFDM symbol index) and length (e.g., the number of OFDM symbols) of the PDSCH in a slot

PDSCH-to-HARQ_feedback timing indicator: Indicates K1.
HARQ process number (4 bits): Indicates the HARQ process ID of data (e.g., a PDSCH or TB).
PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in two bits if spatial bundling is not configured and in one bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter *maxNrofCodeWordsScheduledByDCI* indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

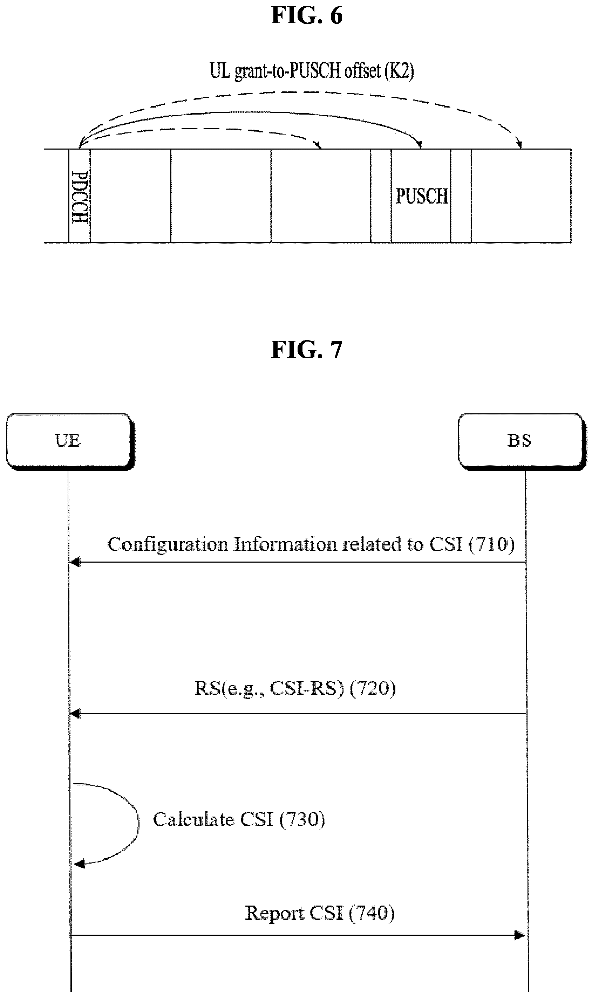

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). DCI format 1_0 or 1_1 may include the following information.

Frequency domain resource assignment: Indicates an RB set assigned to the PUSCH.

Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

CSI related operation

FIG. 7 shows an example of a CSI related procedure.

The UE receives configuration information related to CSI from the BS via RRC signaling (710). The CSI-related configuration information may include at least one of channel state information-interference measurement (CSI-IM)-related information, CSI measurement-related information, CSI resource configuration-related information, CSI-RS resource-related information, or CSI report configuration-related information.

- A CSI-IM resource may be configured for interference measurement (IM) of the UE. In the time domain, the CSI-IM resource set may be configured periodic, semi-persistent, or aperiodic. The CSI-IM resource may be configured to zero power (ZP)-CSI-RS for the UE. ZP-CSI-RS may be configured to be distinguished from non-zero power (NZP)-CSI-RS.

- The UE may assume that CSI-RS resource(s) for channel measurement configured for one CSI reporting and CSI-IM/NZP CSI-RS resource(s) for interference measurement have a QCL relationship with respect to 'QCL-TypeD' for each resource (when NZP CSI-RS resource(s) are used for interference measurement).

- CSI resource configuration may include at least one of a CSI-IM resource for interference measurement, an NZP CSI-RS resource for interference measurement, and an NZP CSI-RS resource for channel measurement. The channel measurement resource (CMR) may be a NZP CSI-RS for CSI acquisition, and the interference measurement resource (IMR) may be an NZP CSI-RS for CSI-IM and IM.

- A CSI-RS may be configured for one or more UEs. Different CSI-RS configurations may be provided for each UE, or the same CSI-RS configuration may be provided to a plurality of UEs. The CSI-RS may support up to 32 antenna ports. CSI-RSs corresponding to N (N being 1 or more) antenna ports may be mapped to N RE locations within a time-frequency unit corresponding to one slot and one RB. When N is 2 or more, N-port CSI-RSs may be multiplexed in CDM, FDM and/or TDM methods. The CSI-RS may be mapped to the remaining REs except for REs to which CORESET, DMRS, and SSB are mapped. In the frequency domain, the CSI-RS may be configured for the entire bandwidth, a partial bandwidth part (BWP), or a partial bandwidth. The CSI-RS may be transmitted in each RB within the bandwidth in which the CSI-RS is configured (i.e., density = 1), or the CSI-RS may be transmitted in every second RB (e.g., even or odd RB) (i.e., density = 1/2). When the CSI-RS is used as a tracking reference signal (TRS), a single-port CSI-RS may be mapped on three subcarriers in each resource block (i.e., density = 3). One or more CSI-RS resource sets may be configured for the UE in the time domain. Each CSI-RS resource set may include one or more CSI-RS configurations. Each CSI-RS resource set may be configured periodic, semi-persistent, or aperiodic.

- The CSI report configuration may include configuration for a feedback type, a measurement resource, a report type, and the like. The NZP-CSI-RS resource set may be used for CSI reporting configuration of a corresponding UE. An NZP-CSI-RS resource set may be associated with the CSI-RS or the SSB. A plurality of periodic NZP-CSI-RS resource sets may be configured as TRS resource sets. (i) The feedback types include a channel quality indicator (CQI), a precoding matrix indicator (PMI), a CSI-RS resource indicator (CRI), an SSB resource block indicator (SSBRI), a layer indicator (LI), a rank indicator (RI), a first layer (L1)-reference signal received strength (RSRP), and the like. (ii) The measurement resource may include configuration for a downlink signal and/or downlink resource on which measurement is performed by the UE to determine feedback information. The measurement resource may be configured as a ZP and/or NZP CSI-RS resource set associated with the CSI report configuration. The NZP CSI-RS resource set may include a CSI-RS set or an SSB set. For example, the L1-RSRP may be measured for a CSI-RS set or for an SSB set. (iii) The report type may include configuration for a time when the UE performs a report and an uplink channel. The reporting time may be configured to be periodic, semi-persistent or aperiodic. The periodic CSI report may be transmitted on a PUCCH. The semi-persistent CSI report may be transmitted on a PUCCH or a PUSCH based on a medium access control (MAC) control element (CE) indicating activation/deactivation. The aperiodic CSI report may be indicated by DCI signaling. For example, a CSI request field of an uplink grant may indicate one of various report trigger sizes. The aperiodic CSI report may be transmitted on a PUSCH.

The UE measures CSI based on configuration information related to CSI. The CSI measurement may include receiving the CSI-RS (720) and acquiring the CSI by computing the received CSI-RS (730).

The UE may transmit a CSI report to the BS (740). For the CSI report, the time and frequency resource available to the UE are controlled by the BS. Channel state information (CSI) includes at least one of a channel quality indicator (CQI), a precoding matrix indicator (PMI), a CSI-RS resource indicator (CRI), a SS/PBCH block resource indicator (SSBRI), a layer indicator (LI), a rank indicator (RI), an L1-RSRP, and/or an L-SINR.

A time domain behavior of CSI reporting supports periodic, semi-persistent, aperiodic. i) Periodic CSI reporting is performed in a short PUCCH, a long PUCCH. Periodicity and a slot offset of periodic CSI reporting may be configured by RRC and refers to a CSI-ReportConfig IE. ii) SP (semi-periodic) CSI reporting is performed in a short PUCCH, a long PUCCH, or a PUSCH. For SP CSI in a short/long PUCCH, periodicity and a slot offset are configured by RRC and a CSI report is activated/deactivated by separate MAC CE/DCI. For SP CSI in a PUSCH, periodicity of SP CSI reporting is configured by RRC, but a slot offset is not configured by RRC and SP CSI reporting is activated/deactivated by DCI (format 0_1). For SP CSI reporting in a PUSCH, a separated RNTI (SP-CSI C-RNTI) is used. An initial CSI report timing follows a PUSCH time domain allocation value indicated by DCI and a subsequent CSI report timing follows a periodicity configured by RRC. DCI format 0_1 may include a CSI request field and activate/deactivate a specific configured SP-CSI trigger state. SP CSI reporting has activation/deactivation equal or similar to a mechanism having data transmission in a SPS PUSCH. iii) Aperiodic CSI reporting is performed in a PUSCH and is triggered by DCI. In this case, information related to trigger of aperiodic CSI reporting may be delivered/indicated/configured through MAC-CE. For AP CSI having an AP CSI-RS, AP CSI-RS timing is configured by RRC and timing for AP CSI reporting is dynamically controlled by DCI.

Quasi-co location (OCL)

When the channel property of an antenna port is to be inferred from a channel of another antenna port, the two antenna ports are quasi co-located. The channel property may include one or more of delay spread, Doppler spread, frequency/Doppler shift, average received power, received Timing/average delay, and a spatial RX parameter.

A list of multiple TCI state configurations may be configured for the UE through a higher layer parameter PDSCH-Config. Each TCI state is associated with a QCL configuration parameter between one or two DL reference signals and the DM-RS port of a PDSCH. The QCL may include qcl-Type1 for a first DL RS and qcl-Type2 for a second DL RS. The QCL type may correspond to one of the followings.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

Operations related to multiple transmission and reception points (M-TRPs)

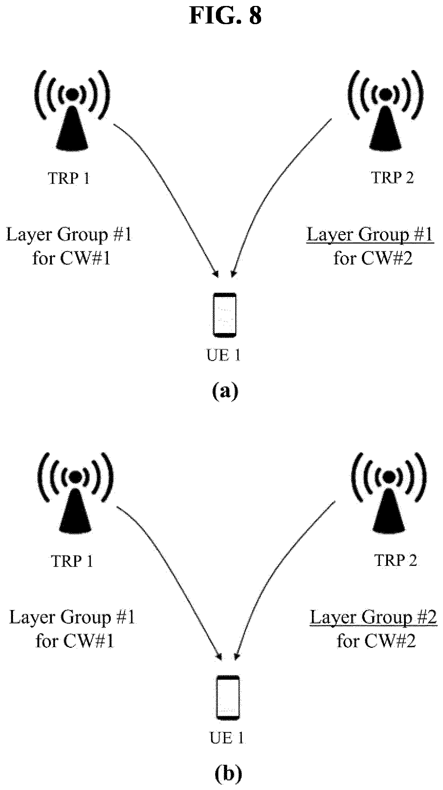

FIG. 8 illustrates multi-TRP (M-TRP) transmission. Referring to FIG. 8-(a), a group of layers transmitting the same codeword (CW) (or TB) correspond to different TRPs. Referring to FIG. 8-(b), different CWs are transmitted through layer groups of different TRPs. In this case, it may be assumed that the TBs corresponding to CW #1 and CW #2 in the drawing are the same. In other words, CW #1 and CW #2 mean that the same TB is converted into different CWs through channel coding, etc., by different TRPs. Therefore, it may be considered as an example of repeated transmission of the same TB. In the case of FIG. 8-(b), there may be a drawback of a higher coding rate corresponding to the TB, compared to FIG. 8-(a). However, FIG. 8-(b) has an advantage that, depending on the channel environment, the coding rate may be adjusted by indicating different values of redundancy version (RV) for encoded bits generated from the same TB, or the modulation order of each CW may be adjusted.

According to the method illustrated in FIGS. 8-(a) and 8-(b), the same TB is repeatedly transmitted through different layer groups. In addition, as each layer group is transmitted by different TRPs/panels, the probability that the UE receives data successfully may increase. This method is referred to as a spatial division multiplexing (SDM) based M-TRP URLLC transmission. The layers belonging to different layer groups are transmitted through DMRS ports that belong to different DMRS code division multiplexing (CDM) groups.

Although the aforementioned M-TRP-related content has been explained based on the SDM method using different layers, it may be extended and applied to an FDM method based on different frequency domain resources (e.g., RB/PRB sets) and/or a TDM method based on different time domain resources (e.g., slots, symbols, sub-symbols, etc.).

**UCI multiplexing for 8Tx UL transmission**

An effective UCI multiplexing method is proposed for 8Tx uplink transmission of a UE equipped with multiple antennas and/or multiple panels in environments such as New Radio Access Technology (RAT) with multiple antennas/panels, considering two transport blocks (TBs).

According to recent standardisation meetings, 2-CW (codeword) may be supported in 8 Tx UL transmission with a rank of 5 or higher, and the CW-to-layer mapping for codebook/non-codebook based transmission may follow the CW-to-layer mapping of DL transmission in Rel.15.

For 8Tx UEs, a maximum of 8 layers and 2-CWs may be supported, and enhancements to UCI multiplexing are required for the support. Hereinafter, of the 2-CWs, a first CW between is denoted as CW1 and a second CW is denoted as CW2. The CW index of CW1 may be 0, and the CW index of CW2 may be 1. In the following description, the term CW may be replaced by TB (transport block).

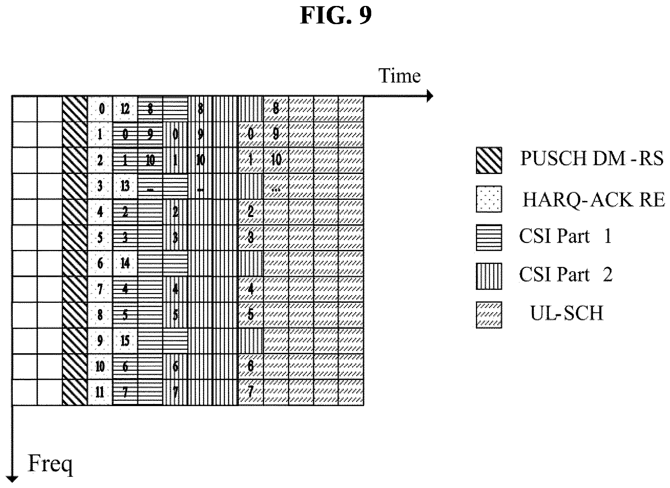

FIG. 9 illustrates UCI mapped onto PUSCH in the current NR standard.

The Distributed UCI mapping rule is applied within the OFDM symbol by comparing the unmapped UCI REs with the available REs in the OFDM symbol.

- HARQ-ACK REs are mapped to available REs in a frequency-first manner, starting with the first non-DM-RS symbol after the first DMRS symbol.
- CSI part 1 REs are mapped to available REs in a frequency-first manner, starting with the first non-DM-RS symbol.
- CSI part 2 REs are mapped to available REs in a frequency-first manner, starting with the first non-DM-RS symbol.

Referring to FIG. 9, unlike in LTE, HARQ-ACK REs are mapped first, followed sequentially by mapping of CSI part 1 and CSI part 2, followed by mapping of PUSCH. If the REs for HARQ-ACK/CSI do not fully fit within a single symbol, they first fill up one symbol, and the remaining REs are uniformly mapped to other symbols in a distributed manner. Then, the subsequent UCIs are mapped in turn according to the rules above. When this UCI mapping is applied to two CWs, the following UCI mapping rules are proposed.

**Proposal 1**

When 2-CWs are supported/transmitted on the uplink, the following UCI mapping rules are proposed.

Alt 0) As an extension of the legacy operation, CSI part 1/2 and HARQ-ACK RE shall be repeatedly mapped to all CW1 (with index 0) and CW2 (with index 1) (i.e., TB1 and TB2).

Alt 1) CSI part 2 shall be mapped to the first codeword (TB1) only, and CSI part 1 and HARQ-ACK RE shall be repeatedly mapped to all CW1 and CW2 (TB1 and TB2).

While CSI part 2 is described in Alt 1 as being mapped to CW1, it may be mapped to CW2, or may be mapped to a CW selected based on proposal 1-E.

Alt 2) CSI part 2 shall be mapped across CW1 and CW2 (TB1 and TB2) (i.e., repetitive mapping shall not be performed), while CSI part 1 and the HARQ-ACK RE shall be repeatedly mapped to all CW1 and CW2 (TB1 and TB2).

Alt 3) CSI parts 1 and 2 shall be mapped across CW1 and CW2 (TB1 and TB2) (i.e., repetitive mapping shall not be performed), while the HARQ-ACK RE shall be repeatedly mapped to all CW1 and CW2 (TB1 and TB2).

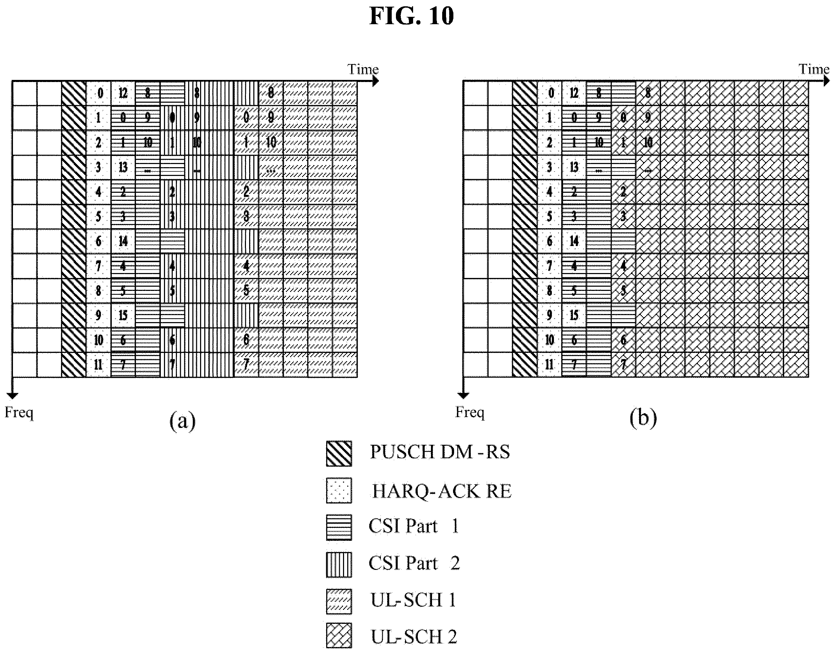

FIG. 10 illustrates an example of UCI mapping according to Alt 1.

In FIG. 10, (a) represents CW1 and (b) represents CW2. For Alt 0, FIG. 9 is mapped repeatedly in all CWs, i.e., UL-SCH1 in CW1 and UL-SCH2 in CW2. In this case, the drawback is that there are fewer REs to which UL-data must be mapped.

As shown in FIG. 10, in the case of Alt 1, CSI part 1 is only mapped to CW1 in (a). Since the size of CSI part 2 is large, it may be inefficient to repeat the mapping to all CWs. In addition, CSI part 1 has more important information than CSI part 2 (CSI part 1 is composed of components that determine the size of part 2 CSI, such as CRI/RI/CQI for CW1; CSI part 2 may be composed of PMI, CQI for CW2, and LI), it is transmitted repeatedly to increase the decoding capability. That is, it is intended to increase the reliability of HARQ-ACK and CSI part 1. In addition, for CSI part 2, it is intended to prevent the coderate of the UL data from being reduced because DL type 2 CSI may be very large in size.

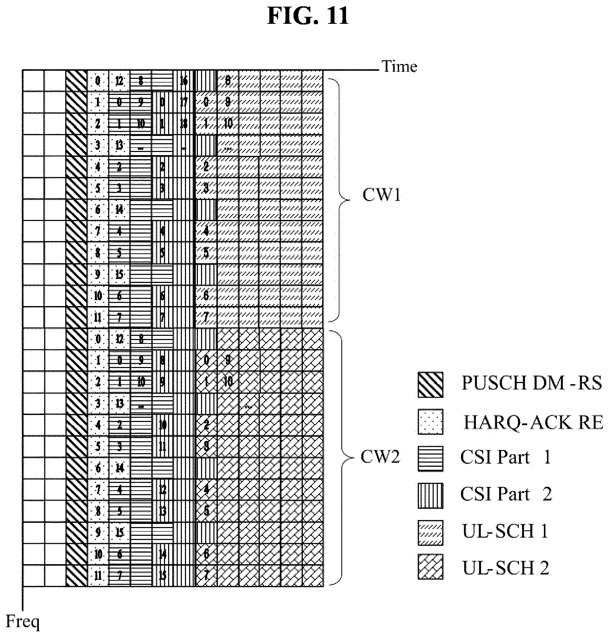

FIG. 11 illustrates an example of UCI mapping according to Alt 2.

Referring to FIG. 11, in Alt 2, HARQ-ACK RE and CSI part 1 are repeatedly mapped to CW1 and CW2. On the other hand, CSI part 2 is not mapped repeatedly, but is mapped across two CWs. In this case, the repetition of CSI part 2 may be reduced, and thus space for UL-SCH 1/2 may be secured.

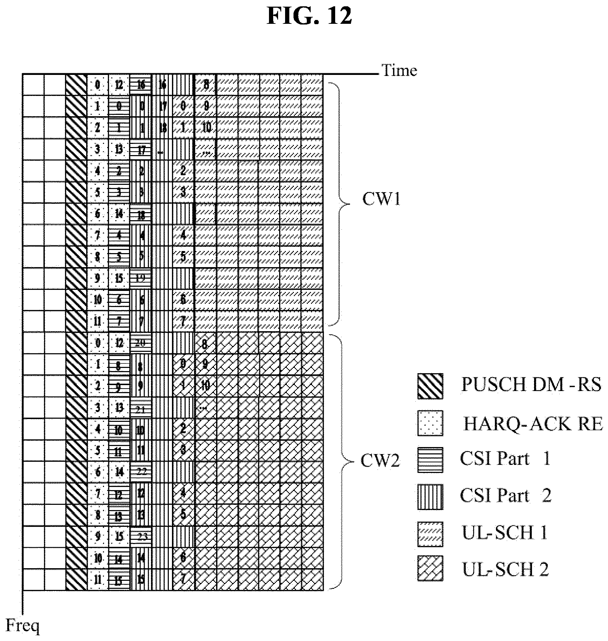

FIG. 12 illustrates an example of UCI mapping according to Alt 3.

Referring to FIG. 12, in Alt 3, only HARQ-ACK RE is repeatedly mapped to CW1 and CW2. CSI part 1/2 is not mapped repeatedly, but is mapped (once) across two CWs. In this case, the repetition of CSI part 1/2 may be reduced, and thus space for UL-SCH 1/2 may be secured.

Alt 4) CSI part 1 and 2 shall be mapped to only a specific CW (e.g., CW1 or 2 (TB1 or TB2)), and HARQ-ACK RE shall be repeatedly mapped to all CW1 and CW2 (TB1 and TB2). That is, only HARQ-ACK RE shall be multiplexed to both codewords, and CSI part 1 and 2 shall be multiplexed to only one CW. One CW shall be selected based on Proposal 1-E, and CSI parts 1 and 2 shall be multiplexed thereto.

Alt 4-1) CSI part 2 shall be mapped to only a specific CW (e.g., CW1 or 2 (TB1 or TB2)), and HARQ-ACK RE and CSI part 1 shall be repeatedly mapped to all CW1 and CW2 (TB1 and TB2). That is, only HARQ-ACK RE and CSI part 1 shall be multiplexed to both codewords, and CSI part 2 shall be multiplexed to only one CW. One CW shall be selected based on Proposal 1-E, and CSI parts 1 and 2 shall be multiplexed.

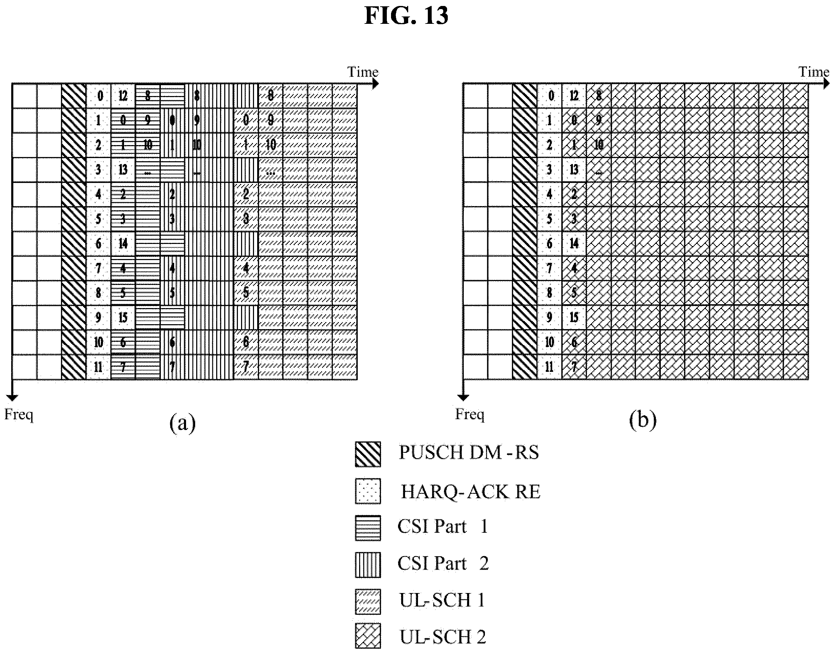

FIG. 13 illustrates an example of UCI mapping according to Alt 4.

Referring to FIG. 13, in Alt 4, only HARQ-ACK RE is repeatedly multiplexed to CW1 and CW2. CSI part 1/2 is mapped to only one specific CW. For example, (a) may be CW1, and CSI part 1/2 may be mapped to CW1 only. In another example, (a) may be CW2, and CSI part 1/2 may be mapped to CW2 only. Alt 4 has the advantage of securing a data RE for a specific CW by reducing the repetition of CSI part 1/2. Further, a specific UE to which all UCIs are mapped may be based on proposal 1-E, which will be described later. That is, the CW to which all UCIs are mapped may correspond to the CW with a higher MCS or larger number of layers between the two CWs. This is intended to increase the reliability of UCIs.

Additionally, in Proposal 1, for the HARQ-ACK RE, up to X bits (e.g., X =2 or is configurable) may be repeatedly mapped to all CWs. However, for more than 2 bits, the mapping may be spread over all CWs.

The mapping to all layers above may mean that specific REs are punctured and the HARQ-ACK bits are multiplexed to those REs.

Each of ALTs 0, 1, 2, and 3 in Proposal 1 has its own advantages and disadvantages. Also, DL codebooks may have a very large payload (e.g., Type 2 codebook) or a much smaller payload (e.g., Type 1 codebook). Therefore, the size of part 2 CSI may vary depending on the codebook. Accordingly, there is a need for more flexibility in configuring/indicating such cases. To this end, an explicit indicator may be used to indicate the mapping rule, or implcit mapping to a specific alt according to the codebook type may be considered.

In the embodiments of Proposal 1, the UCI bits are multiplexed/mapped sequentially for a layer domain. For example, when CW1 is subjected to a 2-layer transmission and the HARQ-ACK (coded) bits are 4 bits, every 2 bits are mapped to a layer.

Currently, for uplink 2-CW to layer mapping, it has been agreed to follow DL CW to layer mapping. Accordingly, for L-layer transmission exceeding 4, floor (L/2) layers are mapped to the first CW, and the remaining layers are mapped to CW2.

In this situation, different CWs may have a different number of layers (particularly, the multiplier relationship may not hold). For example, for a rank 5 transmission, CW1 may be subjected to 2-layer transmission and CW2 may be subjected to 3-layer transmission. In this case, when the HARQ-ACK bit is repeatedly mapped to both CWs, it may be difficult to map the bit by layer. To address this issue, the present disclosure proposes the followings.

(A) Proposal 1-A. In the 2-CW transmission, each bit of some or all of specific UCI (e.g., HARQ-ACK, CSI part 1, CSI part 2) may be repeatedly mapped to the layers of the 2 CWs.

For example, in contrast to the above, Proposal 1-A implies repeated mapping of HARQ-ACK bits to all layers. That is, in the example above, the HARQ-ACK bits, which are 4 bits, may be repeatedly mapped to all layers (i.e., 5 layers in the example above).

(B) Proposal 1-B. In a 2CW transmission, for each bit of some or all of specific UCI (e.g., HARQ-ACK, CSI part 1, CSI part 2), specific UCI bits may be calculated based on the CW with the minimum number of layers between the CWs, and repeatedly mapped to each CW. A specific layer of the CW corresponding to more layers may be 0- padded, or the bits of the specific layer may be repeatedly mapped.

For example, in the example above, the HARQ-ACK bits are generated as 4 bits based on 2 layers for CW1. For CW1, each of the 2 layers is mapped to 2 bits. For CW2, when there are first, second, and third layers, the first and second layers are each mapped to 2 bits, and the third layer is mapped by copying/repeating the bits of the first layer (or second layer). Alternatively, the third layer is zero-padded.

(C) Proposal 1-C. In a 2CW transmission, for each bit of some or all of specific UCI (e.g., HARQ-ACK, CSI part 1, CSI part 2), specific UCI bits may be calculated based on the CW with the maximum number of layers between the CWs, and repeatedly mapped to each CW. In mapping of a CW corresponding to fewer layers, only up to the layer that can be mapped may be mapped, and the remaining bits may be discarded, rather than being mapped.

For example, in the example above, the HARQ-ACK bits are generated as 6 bits based on 3 layers for CW2. For CW2, each of the 3 layers is mapped to 2 bits. For CW1, when there are first, second, and third layers, the first and second layers are each mapped to 2 bits, and the remaining 2 bits are discarded without being mapped.

(D) Proposal 1-D. In a 2-CW transmission, each information bit of some or all the specific UCI (e.g., HARQ-ACK, CSI part 1, CSI part 2) may be repeatedly mapped to the layers of the 2-CWs, and the coded bits mapped to the layers are generated based on the number of layers corresponding to each CW.

For example, in the example above, the HARQ-ACK bits that are repeatedly mapped to each CW are generated as 4 bits for CW1, and 6 bits for CW2. Thus, 2 bits are mapped to each layer. In this case, each CW is mapped to a different number of HARQ-ACK (coded) bits.

(E) Proposal 1-E. Some or all of specific UCI (e.g., HARQ-ACK, CSI part 1, CSI part 2) may be multiplexed to only a specific CW according to the following rules.

In one method, UCI is mapped to only the CW with more (or fewer) layers, without repeating specific UCI (e.g., HARQ-ACK, CSI part 1, CSI part 2). If two CWs have the same number of layers, the UCI is mapped to a specific CW (a predetermined or preset CW, e.g., CW1). For example, in the example above, when the mapping is performed based on the CW with fewer layers, some or all of the UCIs are mapped to only CW1.

As an alternative to the example above, all UCIs may be multiplexed/mapped only to the CW with the greater (or less) value of MCS (e.g., IMCS field). If the two CWs have the same MCS value, the UCI is multiplexed/mapped to a specific CW (a predetermined or preset CW, e.g., CW1 or CW2). For example, in the example above, when the index of the MCS for CW1 is 10 and the MCS value for CW2 is 13, all UCIs may be multiplexed/mapped to CW2. Also, if the two CWs have the same MCS value, some or all of the UCIs are multiplexed/mapped to CW1 with index 0 (or CW2 with index 1) only. As an example, in transmitting two CWs (i.e., in the case of 8Tx, TRI>=4 is indicated to enable 2CWs), all UCIs may be multiplexed to only the CW with the greater value of MCS (CW2 in the example above).

As an alternative to the example above, all UCIs may be mapped to the CW with the greater (or less) value of the function of (the number of layers, modulation order), e.g., the number of layers x modulation order. When the two CWs have the same value of the function, then some or all of the UCIs are mapped to a specific CW (a predetermined or preset CW, e.g., CW1).

As an alternative to the example above, all UCIs may be mapped to the CW with the larger (or smaller) TB size. If the two CWs have the same TB size, some or all of the UCIs are mapped to only a specific CW (a predetermined or preset CW, e.g., CW1 (or CW2)).

As an alternative to the example above, all UCIs may be mapped to the CW with the greater SINR. If the two CWs have the same SINR, some or all of the UCIs are mapped to a specific CW (a predetermined or preset, e.g., CW1 (or CW2)).

Examples for mapping only some of the UCIs to a specific CW may include the HARQ-ACK bit and/or CSI part 1.

A UCI multiplexing operation based on the priority of the HARQ ACK-NACK / PUSCH supported for NR URLLC may also be considered. In Rel-16 NR, when the resources for the high priority (HP) PUCCH/PUSCH and the low priority (LP) PUCCH/PUSCH overlap with each other (on, for example, the time axis), the LP PUCCH/PUSCH will always be dropped and the PUCCH/PUSCH corresponding to the HP will be transmitted. In Rel-17, when the HP/LP PUCCH overlaps wth the LP/HP PUSCH, multiplexing by which the HP/LP UCI is mapped onto the LP/HP PUSCH and transmitted is supported. Therefore, the following cases (i) to (iv) are supported by the UE capability.

(i) HP UCI on LP PUSCH
(ii) LP UCI on HP PUSCH
(iii) HP UCI+LP UCI on HP PUSCH
(iv) HP UCI+LP UCI on LP PUSCH

When cases (i) to (iv) above are extended to the case of 2CW PUSCH, a specific UCI may be mapped to only one CW or to both CWs depending on the priority based on proposal 1 or 1-A/B/C/D/E.

In particular, HP UCI may be mapped to only one CW (based on proposal E) when multiplexed on HP PUSCH, and may be repeatedly mapped to both CWs when multiplexed on LP PUSCH. In the example above, this scheme may be limited to HP HARQ-ACK and/or Part 1 CSI. Also, LP UCI (and/or HP CSI), it may always be mapped to only one CW (based on Proposal E), regardless of whether it is multiplexed on HP PUSCH or LP PUSCH.

In the current NR spec, when the HARQ-ACK bit is <= 2, the HARQ-ACK bit may be mapped by puncturing a specific UCI (e.g., CSI part 2 or PUSCH). In particular, high priority PUSCH may not be punctured even when HARQ-ACK bit <=2, but the UCI may be multiplexed as in the case of HARQ-ACK bit >2. In other words, when a UCI is mapped to high priority PUSCH, the PUSCH is not punctured regardless of the number of HARQ-ACK bits.

**Proposal 1-1**

In Alt 0/1/2/3 of Proposal 1, the UCI (e.g., HARQ-ACK RE / CSI part 1 / CSI part 2) mapped to CW2 may be punctured to leave the corresponding RE unoccupied and transmit UL-SCH2 of CW2 without UCI.

The advantage of Proposal 1-1 is that the power to be used on the puncturing RE may be used for other REs (e.g., CW2 transmission) to boost the power of those REs.

Thus, in Alt 0/1/2/3 of Proposal 1, some or all of the HARQ-ACK RE and/or CSI part 1 and/or CSI part 2 that are multiplexed to CW2 may be punctured. The non-punctured UCIs shall follow Alt 0/1/2/3 of Proposal 1, and the remaining UCIs shall be punctured.

In another embodiment, when specific UCIs are punctured, as in Proposal 1-1, they may be punctured uniformly throughout CW2 or in a specific pattern, depending on the number of REs being punctured. This is intended to prevent the entirety of a specific symbol from being punctured, an example of which is described below. As a special case, UCIs may not be multiplexed to CW2 and may be punctured by the number of REs of the specific UCI(s) multiplexed to CW1, or by a predefined number of REs.

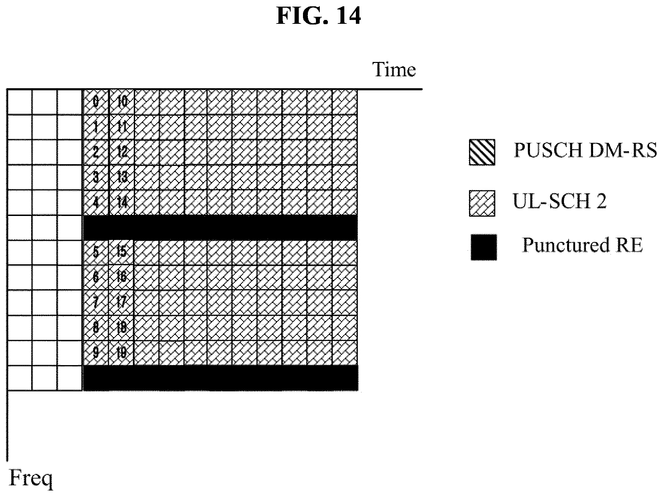

FIG. 14 illustrates an example of UCI mapping according to Proposal 1-1.

In FIG. 14, UL-SCH2 is mapped to CW2 with no UCIs, and specific REs are punctured. The puncturing pattern may be determined as a function of the number of REs corresponding to some or all of the UCIs, as described above, or a specific predetermined pattern, or a specific puncturing pattern may be indicated/configured by a BS.

[Table 6]

**6.3.2.4 Rate matching**

**6.3.2.4.1 UCI encoded by Polar code**

**6.3.2.4.1.1 HARQ-ACK**

For HARQ-ACK transmission on PUSCH not using repetition type B with UL-SCH and if *numberOfSlotsTBoMS* is not present in the resource allocation table, or if *numberOfSlotsTBoMS* is present in the resource allocation table and the value of *numberOfSlotsTBoMS* in the row indicated by the Time domain resource assignment field in DCI is equal to 1,

the number of coded modulation symbols per layer for HARQ-ACK transmission, denoted as $Q'_{\mathrm{ACK}}$ , is determined as follows:

$$Q'_{\mathrm{ACK}} = \min\left\{ \left\lceil \frac{\left(O_{\mathrm{ACK}} + L_{\mathrm{ACK}}\right) \cdot \beta^{\mathrm{PUSCH}}_{\mathrm{offset}} \cdot \sum_{l=0}^{N^{\mathrm{PUSCH}}_{\mathrm{symb,all}}-1} M^{\mathrm{UCI}}_{\mathrm{sc}}(l)}{\sum_{r=0}^{C_{\mathrm{UL-SCH}}-1} K_r} \right\rceil, \left\lceil \alpha \cdot \sum_{l=l_0}^{N^{\mathrm{PUSCH}}_{\mathrm{symb,all}}-1} M^{\mathrm{UCI}}_{\mathrm{sc}}(l) \right\rceil \right\}$$

where

- $O_{\mathrm{ACK}}$ is the number of HARQ-ACK bits;

- if $O_{\mathrm{ACK}} \geq 360$, $L_{\mathrm{ACK}}$ = 11; otherwise $L_{\mathrm{ACK}}$ is the number of CRC bits for HARQ-ACK determined according to Clause 6.3.1.2.1;

$$\beta^{\mathrm{PUSCH}}_{\mathrm{offset}} = \beta^{\mathrm{HARQ-ACK}}_{\mathrm{offset}}$$

(continued)

- $C_{\text{UL-SCH}}$ is the number of code blocks for UL-SCH of the PUSCH transmission;
- if the DCI format scheduling the PUSCH transmission includes a CBGTI field indicating that the UE shall not transmit the *r*-th code block, $K_r$=0; otherwise, $K_r$ is the *r*-th code block size for UL-SCH of the PUSCH transmission;

- $M_{\text{sc}}^{\text{PUSCH}}$ is the scheduled bandwidth of the PUSCH transmission, expressed as a number of subcarriers;

- $M_{\text{sc}}^{\text{PT-RS}}(l)$ is the number of subcarriers in OFDM symbol *l* that carries PTRS, in the PUSCH transmission;

- $M_{\text{sc}}^{\text{UCI}}(l)$ is the number of resource elements that can be used for transmission of UCI in OFDM symbol *l*, for

$$l = 0, 1, 2, ..., N_{\text{symb,all}}^{\text{PUSCH}} - 1$$

, in the PUSCH transmission and $N_{\text{symb,all}}^{\text{PUSCH}}$ is the total number of OFDM symbols of the PUSCH, including all OFDM symbols used for DMRS;

- for any OFDM symbol that carries DMRS of the PUSCH, $M_{\text{sc}}^{\text{UCI}}(l) = 0$;

$$M_{\text{sc}}^{\text{UCI}}(l) = M_{\text{sc}}^{\text{PUSCH}} - M_{\text{sc}}^{\text{PT-RS}}(l)$$;

- for any OFDM symbol that does not carry DMRS of the PUSCH,
- $\alpha$ is configured by higher layer parameter *scaling;*
- $l_0$ is the symbol index of the first OFDM symbol that does not carry DMRS of the PUSCH, after the first DMRS symbol(s), in the PUSCH transmission.

The 38.212 standard document defines the number of UCI REs. Table 6 is an excerpt from the section of the 38.212 standard document that defines the number of HARQ-ACK REs.

In addition, the number of REs in CSI part 1/2 as defined in the 38.212 standard document is summarized in Equations 1/2. Equation 1 represents the number of UCI REs on the PUSCH with UL-SCH (data), and Equation 2 represents the number of UCI REs on the PUSCH without UL-SCH (data).

[Equation 1]

$$Q'_{\text{ACK}} = \min\left\{ \frac{(O_{\text{ACK}}+L_{\text{ACK}})\cdot\beta_{\text{offset}}^{\text{PUSCH}}\cdot\sum_{l=0}^{N_{\text{symb,all}}^{\text{PUSCH}}-1} M_{\text{sc}}^{\text{UCI}}(l)}{\sum_{r=0}^{C_{\text{UL-SCH}}-1} K_r}, \; \alpha\cdot\sum_{l=l_0}^{N_{\text{symb,all}}^{\text{PUSCH}}-1} M_{\text{sc}}^{\text{UCI}}(l) \right\}$$

$$Q'_{\text{CSI-1}} = \min\left\{ \frac{(O_{\text{CSI-1}}+L_{\text{CSI-1}})\cdot\beta_{\text{offset}}^{\text{PUSCH}}\cdot\sum_{l=0}^{N_{\text{symb,all}}^{\text{PUSCH}}-1} M_{\text{sc}}^{\text{UCI}}(l)}{\sum_{r=0}^{C_{\text{UL-SCH}}-1} K_r}, \; \left[\alpha\cdot\sum_{l=0}^{N_{\text{symb,all}}^{\text{PUSCH}}-1} M_{\text{sc}}^{\text{UCI}}(l)\right] - Q'_{\text{ACK}} \right\}$$

$$Q'_{\text{CSI-2}} = \min\left\{ \frac{(O_{\text{CSI-2}}+L_{\text{CSI-2}})\cdot\beta_{\text{offset}}^{\text{PUSCH}}\cdot\sum_{l=0}^{N_{\text{symb,all}}^{\text{PUSCH}}-1} M_{\text{sc}}^{\text{UCI}}(l)}{\sum_{r=0}^{C_{\text{UL-SCH}}-1} K_r}, \; \left[\alpha\cdot\sum_{l=0}^{N_{\text{symb,all}}^{\text{PUSCH}}-1} M_{\text{sc}}^{\text{UCI}}(l)\right] - Q'_{\text{ACK}} - Q'_{\text{CSI-1}} \right\}$$

[Equation 2]

$$Q'_{ACK} = \min\left\{ \left\lceil \frac{(O_{ACK}+L_{ACK})\cdot \beta_{offset}^{PUSCH}}{R\cdot Q_m} \right\rceil, \left\lceil \alpha \cdot \sum_{l=l_0}^{N_{symb,all}^{PUSCH}-1} M_{sc}^{UCI}(l) \right\rceil \right\}$$

$$Q'_{CSI-1} = \min\left\{ \left\lceil \frac{(O_{CSI-1}+L_{CSI-1})\cdot \beta_{offset}^{PUSCH}}{R\cdot Q_m} \right\rceil, \sum_{l=0}^{N_{symb,all}^{PUSCH}-1} M_{sc}^{UCI}(l) - Q'_{ACK} \right\} \text{ or } \sum_{l=0}^{N_{symb,all}^{PUSCH}-1} M_{sc}^{UCI}(l) - Q'_{ACK}$$

$$Q'_{CSI-1} = \sum_{l=0}^{N_{symb,all}^{PUSCH}-1} M_{sc}^{UCI}(l) - Q'_{ACK} - Q'_{CSI-1}$$

As shown in Equations 1/2 above, an RRC configurable alpha has been introduced for UCI RE limitation. As a scaling value in PUSCH-config, the value of alpha is indicated/set.

[Table 7]

| UCI-OnPUSCH ::= | SEQUENCE { | |
|---|---|---|
| betaOffsets | CHOICE { | |
| dynamic | SEQUENCE (SIZE (4)) OF BetaOffsets, | |
| semiStatic | BetaOffsets | |
| } | | OPTIONAL, -- Need M |
| scaling | ENUMERATED { f0p5, f0p65, f0p8, f1 } | |
| } | | |

When dual CW is supported, the parameter above may need to be enhanced for the BS configuration and flexibility. To this end, the following is proposed.

**Proposal 2**

According to Proposal 2, the higher layer parameter scaling (alpha) may be configured/applied differently for each CW. For example, the value of alpha in alt 0/1/2/3 in Proposal 1 may be set/applied differently for each CW. That is, multiple values of alpha may be set for the CWs, respectively.

Equation 3 is an excerpt of the right-hand side component in the min { , } operation in Equation 1/2.

[Equation 3]

$$\left\lceil \alpha \cdot \sum_{l=l_0}^{N_{symb,all}^{PUSCH}} M_{SC}^{UCI}(l) \right\rceil$$

In one embodiment, different values of alpha may be applied to the CWs, respectively, in Equation 3. For example, when alpha 1/2 are applied for CW1 and CW2, respectively, in Equation 3, Equation 4 may be obtained.

[Equation 4]

$$\left[\alpha_1 \cdot \sum_{l=l_0}^{N_{symb,all}^{PUSCH}} M_{SC}^{UCI}(l)\right] \text{ for CW1}$$

$$\left[\alpha_2 \cdot \sum_{l=l_0}^{N_{symb,all}^{PUSCH}} M_{SC}^{UCI}(l)\right] \text{ for CW2}$$

In Proposal 2, depending on the alt in Proposal 1 (e.g., alt0/1/2/3), the type and number of UCIs mapped to each CW is different. Thus, in Proposal 2, when a specific alt in Proposal 1 is applied, different values of alpha may be set/indicated for the respective CWs to perform RE mapping. This is intended to increase the flexibility of RE configuration/indication for each CW.

As another example of Proposal 2, with a single value of alpha set, the equation above may be set to be variable depending on the number of CWs/layers transmitted. For example, Equation 3 in the min { , } operation may be expressed as Equation 5.

[Equation 5]

$$\left[\alpha \cdot \sum_{l=l_0}^{N_{symb,all}^{PUSCH}} M_{SC}^{UCI}(l) \cdot K\right]$$

For example, in Equation 5, K may be determined based on the number of CWs. For example, the value of K may be set to K=2 only for 2 TB transmission (e.g., transmissions with RANK>4). For UEs capable of transmitting 2 TBs by capability, K may be set to K=2, or a value set by the BS as a higher layer parameter. With this method, the amount of UCI may be limited by taking into account the REs mapped to all CWs, regardless of the amount of UCI mapped to each CW.

In another embodiment, alpha may be set (differently) for 1 TB PUSCH and 2 TB PUSCH case. In other words, the value of alpha assumed by the UE in the case of transmission with rank >4 may be different from the value of alpha assumed in the opposite case (rank<=4).

Proposal 2 is applied to one serving cell.

## Proposal 3

According to Proposal 3, for alt 0/1/2/3 in Proposal 1, the beta offset may be set/applied differently for each CW. In other words, multiple beta offset values may be set for each CW.

The value of beta offset included in the left component of the min { , } operation in Equation 1/2 above may also be set/applied differently for each CW.

For example, the left component of the min { , } operation in Equation 1 is shown in Equation 6.

[Equation 6]

$$\left[\frac{(O_{ACK} + L_{ACK}) \cdot \beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r}\right]$$

When a different beta offset is applied for each CW in Equation 6, Equation 7 may be obtained.

[Equation 7]

$$\left[ \frac{(O_{\text{ACK}}+L_{\text{ACK}})\cdot\beta^{\text{PUSCH}}_{\text{offset},1}\cdot\sum_{l=0}^{N^{\text{PUSCH}}_{\text{symb,all}}-1} M^{\text{UCI}}_{\text{sc}}(l)}{\sum_{r=0}^{C_{\text{UL-SCH}}-1} K_r} \right] \text{ for CW1}$$

$$\left[ \frac{(O_{\text{ACK}}+L_{\text{ACK}})\cdot\beta^{\text{PUSCH}}_{\text{offset},2}\cdot\sum_{l=0}^{N^{\text{PUSCH}}_{\text{symb,all}}-1} M^{\text{UCI}}_{\text{sc}}(l)}{\sum_{r=0}^{C_{\text{UL-SCH}}-1} K_r} \right] \text{ for CW2}$$

In Proposal 3, depending on the alt in Proposal 1 (e.g., alt0/1/2/3), the type and number of UCIs mapped to each CW is different. Thus, in Proposal 2, when a specific alt in Proposal 1 is applied, different values of beta offset may be set/indicated for the respective CWs to perform RE mapping. This is intended to increase the flexibility of RE configuration/indication for each CW. In another embodiment, the beta offset may be set semi-statically or dynamically. For only the semi-static setting, Proposal 3 may be configured.

Proposal 3 is applied for one serving cell.

In another embodiment, the beta offset may be set (differently) for 1 TB PUSCH and 2 TB PUSCH case. In other words, the value of the beta offset assumed by the UE in the case of transmission with rank >4 may be different from the value of the beta offset assumed in the opposite case (rank<=4).

In the above proposals, 2-CW transmission is the case when the UE performs uplink transmission with rank >4, and the rank information related to the 2-CW transmission may vary depending on the CW-to-layer mapping.

Proposals 1, 2, and 3 and the embodiments described above may be configured independently or in combination.

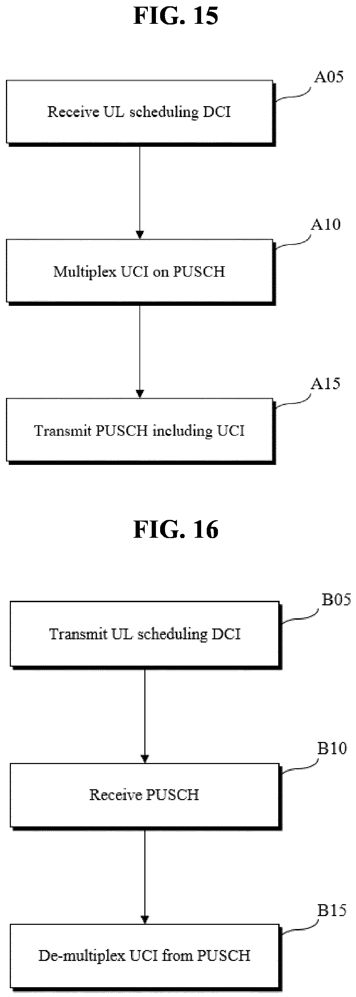

FIG. 15 illustrates a flow of a method of transmitting a signal by a UE in a wireless communication system according to one embodiment.

Referring to FIG. 15, the UE may receive downlink control information (DCI) for uplink scheduling (A05).

The UE may multiplex the UCI on PUSCH (A10). Based on the UCI overlapping with the PUSCH transmission, the UCI may be piggybacked on the PUSCH.

The UE may transmit the physical uplink shared channel (PUSCH) based on the DCI (A15).

Based on the transmission of the PUSCH being related to an 8-transmission port and including a plurality of codewords (CWs), first uplink control information (UCI) may be multiplexed into one of the CWs. The one CW into which the first UCI may be multiplexed may have a highest modulation and coding scheme (MCS) value among the CWs. Based on the number of CWs having the highest MCS value being greater than or equal to 2, a CW with a lowest CW index among the CWs having the highest MCS value may be determined as the one CW into which the first UCI may be multiplexed.

The CWs may include a first CW having a first index and a second CW having a second index higher than the first index. Based on the first CW and the second CW having the same MCS value, the first UCI may be multiplexed into only the first CW.

The first UCI may include hybrid automatic repeat request-acknowledgment (HARQ-ACK), channel state information (CSI) part 1, and CSI part 2.

The second UCI different from the first UCI may be multiplexed into all the CWs.

In one example, the second UCI may include hybrid automatic repeat request-acknowledgment (HARQ-ACK). The HARQ-ACK may be repeatedly mapped on the plurality of CWs.

In one example, second UCI different from the first UCI may be multiplexed into all the CWs. The second UCI may include channel state information (CSI). The CSI may be mapped once over the plurality of CWs.

Based on the first UCI having a first priority value lower than a second priority value, the first UCI may be multiplexed into only the determined one CW.

Second UCI having the second priority value higher than the first priority value may be multiplexed into all the CWs.

The CWs may be enabled when a rank value is greater than 4.

A higher layer parameter for determining the number of UCI resource elements (REs) may be configured for each of the CWs. The higher layer parameter may include at least one of an alpha parameter or a beta offset parameter for rate matching.

FIG. 16 illustrates a flow of a method of receiving a signal by a BS in a wireless communication system according to one embodiment.

The BS may transmit downlink control information (DCI) for uplink scheduling (B05).

The BS may receive a physical uplink shared channel (PUSCH) based on said DCI (B10).

The BS may de-multiplex the UCI multiplexed into the CW(s) of the PUSCH (B15).

Based on the reception of the PUSCH being related to an 8-transmission port and including a plurality of codewords (CWs), first uplink control information (UCI) may be de-multiplexed from one of the CWs.

The one CW from which the first UCI is de-multiplexed may have a highest modulation and coding scheme (MCS) value among the CWs. Based on the number of CWs having the highest MCS value being greater than or equal to 2, a CW with a lowest CW index among the CWs having the highest MCS value may be determined as the one CW from which the first UCI is de-multiplexed.

The CWs may include a first CW having a first index and a second CW having a second index higher than the first index. Based on the first CW and the second CW having the same MCS value, the first UCI may be de-multiplexed from only the first CW.

The first UCI may include hybrid automatic repeat request-acknowledgment (HARQ-ACK), channel state information (CSI) part 1, and CSI part 2.

The second UCI different from the first UCI may be de-multiplexed from all the CWs.

In one example, the second UCI may include hybrid automatic repeat request-acknowledgment (HARQ-ACK). The HARQ-ACK may be repeatedly mapped on the plurality of CWs.

In one example, second UCI different from the first UCI may be multiplexed into all the CWs. The second UCI may include channel state information (CSI). The CSI may be mapped once over the plurality of CWs.

Based on the first UCI having a first priority value lower than a second priority value, the first UCI may be de-multiplexed from only the determined one CW.

Second UCI having the second priority value higher than the first priority value may be de-multiplexed from all the CWs.

The CWs may be enabled when a rank value is greater than 4.

A higher layer parameter for determining the number of UCI resource elements (REs) may be configured for each of the CWs. The higher layer parameter may include at least one of an alpha parameter or a beta offset parameter for rate matching.

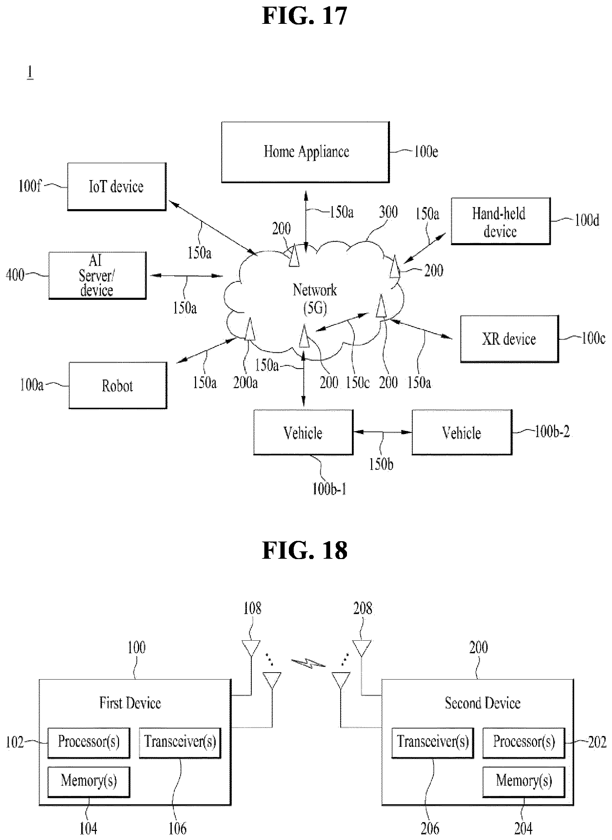

FIG. 17 illustrates a communication system 1 applied to the present disclosure.

Referring to FIG. 17, a communication system 1 includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 18 illustrates wireless devices applicable to the present disclosure.

Referring to FIG. 18, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 17.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

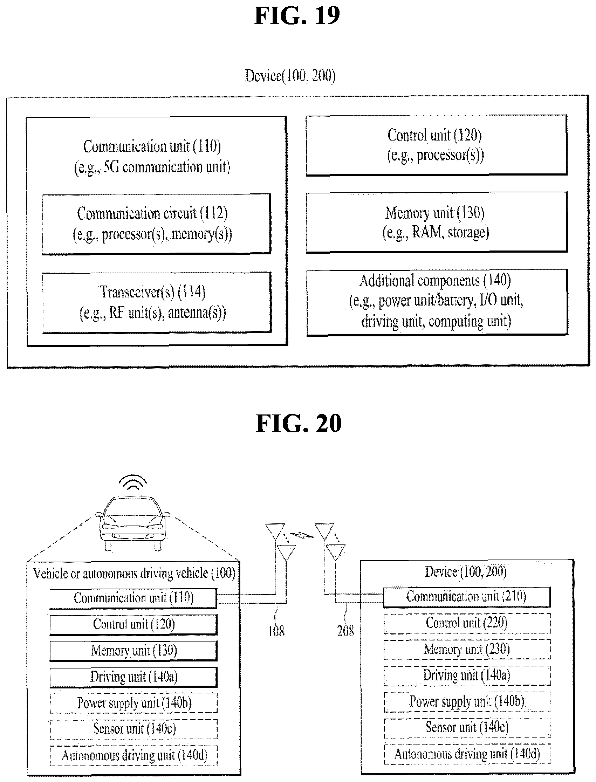

FIG. 19 illustrates another example of a wireless device applied to the present disclosure. The wireless device may be implemented in various forms according to a use-case/service (refer to FIG. 17).

Referring to FIG. 19, wireless devices 100 and 200 may correspond to the wireless devices 100 and 200 of FIG. 18 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 18. For example, the transceiver(s) 114 may include the one or more transceivers 106 and 206 and/or the one or more antennas 108 and 208 of FIG. 18. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 17), the vehicles (100b-1 and 100b-2 of FIG. 17), the XR device (100c of FIG. 17), the hand-held device (100d of FIG. 17), the home appliance (100e of FIG. 17), the IoT device (100f of FIG. 17), a digital broadcast terminal, a hologram device, a public safety device, an MTC device, a medicine device, a fintech device (or a finance device), a security device, a climate/environment device, the AI server/device (400 of FIG. 17), the BSs (200 of FIG. 17), a network node, etc. The wireless device may be used in a mobile or fixed place according to a use-example/service.

In FIG. 19, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 20 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 20, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 19, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

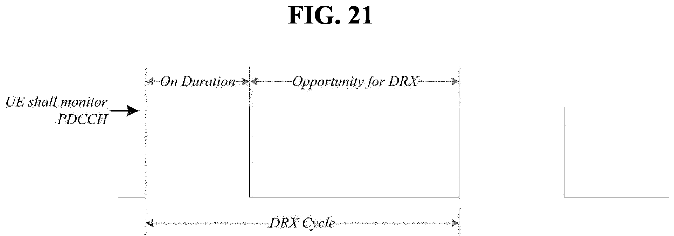

FIG. 21 is a diagram illustrating a DRX operation of a UE according to an embodiment of the present disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC_CONNECTED state. The UE performs DRX to receive a paging signal discontinuously in the RRC_IDLE state and the RRC_INACTIVE state. DRX in the RRC_CONNECTED state (RRC_CONNECTED DRX) will be described below.

Referring to FIG. 21, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the afore-described/proposed procedures and/or methods. For example, when DRX is configured, PDCCH reception occasions (e.g., slots with PDCCH SSs) may be configured discontinuously according to a DRX configuration in the present disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in the present disclosure. Irrespective of whether DRX is configured, PDCCH monitoring may be restricted during a time period configured as a measurement gap.

DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the afore-described/proposed procedures and/or methods.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, it is apparently understandable that an embodiment is configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

[Industrial Applicability]

The present disclosure is applicable to UEs, BSs, or other apparatuses in a wireless mobile communication system.

**Claims**

1. A method of transmitting a signal by a terminal in a wireless communication system, the method comprising:

   receiving downlink control information (DCI) for uplink scheduling; and
   transmitting a physical uplink shared channel (PUSCH) based on the DCI,
   wherein, based on the transmission of the PUSCH being related to an 8-transmission port and comprising a plurality of codewords (CWs), first uplink control information (UCI) is multiplexed into one of the plurality of CWs,
   wherein the one CW into which the first UCI is multiplexed has a highest modulation and coding scheme (MCS) value among the plurality of CWs, and
   wherein, based on a number of CWs having the highest MCS value being greater than or equal to 2, a CW with a lowest CW index among the CWs having the highest MCS value is determined as the one CW into which the first UCI is multiplexed.

2. The method of claim 1, wherein the plurality of CWs comprise a first CW having a first index and a second CW having a second index higher than the first index,
   wherein, based on the first CW and the second CW having the same MCS value, the first UCI is multiplexed into only the first CW.

3. The method of claim 1, wherein the first UCI comprises hybrid automatic repeat request-acknowledgment (HARQ-ACK), channel state information (CSI) part 1, and CSI part 2.

4. The method of claim 1, wherein second UCI different from the first UCI is multiplexed into all the plurality of CWs,

   wherein the second UCI comprises hybrid automatic repeat request-acknowledgment (HARQ-ACK).
   wherein the HARQ-ACK is repeatedly mapped on the plurality of CWs.

5. The method of claim 1, wherein second UCI different from the first UCI is multiplexed into all the plurality of CWs,

wherein the second UCI comprises channel state information (CSI),
wherein the CSI is mapped once over the plurality of CWs.

6. The method of claim 1, wherein, based on the first UCI having a first priority value lower than a second priority value, the first UCI is multiplexed into only the determined one CW.

7. The method of claim 6, wherein second UCI having the second priority value higher than the first priority value is multiplexed into all the plurality of CWs.

8. The method of claim 1, wherein the plurality of CWs are enabled when a rank value is greater than 4.

9. The method of claim 1, wherein a higher layer parameter for determining the number of UCI resource elements (REs) is configured for each CW, wherein the higher layer parameter comprises at least one of an alpha parameter or a beta offset parameter for rate matching.

10. A computer-readable recording medium storing a program for performing the method of claim 1.

11. A device for wireless communication, the device comprising:

   a memory configured to store instructions; and
   a processor configured to execute the instructions to perform operations,
   wherein the operations of the processor comprise:

      receiving downlink control information (DCI) for uplink scheduling; and
      transmitting a physical uplink shared channel (PUSCH) based on the DCI,
      wherein, based on the transmission of the PUSCH being related to an 8-transmission port and comprising a plurality of codewords (CWs), first uplink control information (UCI) is multiplexed into one of the plurality of CWs,
      wherein the one CW into which the first UCI is multiplexed has a highest modulation and coding scheme (MCS) value among the plurality of CWs, and
      wherein, based on a number of CWs having the highest MCS value being greater than or equal to 2, a CW with a lowest CW index among the CWs having the highest MCS value is determined as the one CW into which the first UCI is multiplexed.

12. The device of claim 11, further comprising a transceiver, wherein the device is a terminal operating in a wireless communication system.

13. The device of claim 11, wherein the device is a processing device configured to control a terminal operating in a wireless communication system.

14. A method of receiving a signal by a base station in a wireless communication system, the method comprising:

   transmitting downlink control information (DCI) for uplink scheduling; and
   receiving a physical uplink shared channel (PUSCH) based on the DCI,
   wherein, based on the reception of the PUSCH being related to an 8-transmission port and comprising a plurality of codewords (CWs), first uplink control information (UCI) is de-multiplexed from one of the plurality of CWs,
   wherein the one CW from which the first UCI is de-multiplexed has a highest modulation and coding scheme (MCS) value among the plurality of CWs, and
   wherein, based on a number of CWs having the highest MCS value being greater than or equal to 2, a CW with a lowest CW index among the CWs having the highest MCS value is determined as the one CW from which the first UCI is de-multiplexed.

15. A base station for wireless communication, the base station comprising:

   a memory configured to store instructions; and
   a processor configured to execute the instructions to perform operations,
   wherein the operations of the processor comprise:

transmitting downlink control information (DCI) for uplink scheduling; and

receiving a physical uplink shared channel (PUSCH) based on the DCI,

wherein, based on the reception of the PUSCH being related to an 8-transmission port and comprising a plurality of codewords (CWs), first uplink control information (UCI) is de-multiplexed from one of the plurality of CWs,

wherein the one CW from which the first UCI is de-multiplexed has a highest modulation and coding scheme (MCS) value among the plurality of CWs, and

wherein, based on a number of CWs having the highest MCS value being greater than or equal to 2, a CW with a lowest CW index among the CWs having the highest MCS value is determined as the one CW from which the first UCI is de-multiplexed.

# FIG. 1

| Initial Cell Search | System Information Reception | Random Access Procedure | General DL/UL Tx/Rx S108 |

PSS/SSS & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH

S101    S102    S103    S104    S105    S106    S107    • DL/UL ACK/NACK
• UE CQI/PMI/Rank Report using PUSCH and PUCCH

# FIG. 2

One Frame (10ms)

Half-Frame (5ms)    Half-Frame (5ms)

Subframe 0 (1ms)    Subframe 4 (1ms)    Subframe 5 (1ms)    Subframe 9 (1ms)

Subframe (1ms)

15KHz    Slot (14 symbols)
1ms

30KHz    Slot 0 (14 symbols)    Slot 1
500us

60KHz    Slot 0 (14 symbols)    Slot 1    Slot 2    Slot 3
250us

120KHz    Slot 0 (14 symbols)    Slot 1    Slot 2    Slot 3    Slot 4    Slot 5    Slot 6    Slot 7
125us

# FIG. 3

Resource grid

A carrier
(up to 3300 subcarriers, i. e., 275 RBs)

A BWP

1 RB = 12 subcarriers

1 RE

1 subcarrier

1 symbol

# FIG. 4

# FIG. 5

# FIG. 6

UL grant-to-PUSCH offset (K2)

| PDCCH | | | | | PUSCH | | |

# FIG. 7

| UE | | BS |

Configuration Information related to CSI (710)

RS(e.g., CSI-RS) (720)

Calculate CSI (730)

Report CSI (740)

# FIG. 8

TRP 1

Layer Group #1
for CW#1

TRP 2

Layer Group #1
for CW#2

UE 1

**(a)**

TRP 1

Layer Group #1
for CW#1

TRP 2

Layer Group #2
for CW#2

UE 1

**(b)**

# FIG. 9

# FIG. 10

(a)

(b)

| | PUSCH DM-RS |
| | HARQ-ACK RE |
| | CSI Part 1 |
| | CSI Part 2 |
| | UL-SCH 1 |
| | UL-SCH 2 |

EP 4 618 463 A1

EP 4 618 463 A1

## FIG. 11

Legend:
- PUSCH DM-RS
- HARQ-ACK RE
- CSI Part 1
- CSI Part 2
- UL-SCH 1
- UL-SCH 2

# FIG. 12

# FIG. 13

(a)

(b)

| | | |
|:---:|:---|:---|
| ▨ | PUSCH DM-RS | |
| ▨ | HARQ-ACK RE | |
| ▤ | CSI Part 1 | |
| ▥ | CSI Part 2 | |
| ▨ | UL-SCH 1 | |
| ▨ | UL-SCH 2 | |

# FIG. 14

Time

Freq

PUSCH DM-RS

UL-SCH 2

Punctured RE

# FIG. 15

Receive UL scheduling DCI — A05

Multiplex UCI on PUSCH — A10

Transmit PUSCH including UCI — A15

# FIG. 16

Transmit UL scheduling DCI — B05

Receive PUSCH — B10

De-multiplex UCI from PUSCH — B15

# FIG. 17

# FIG. 18

# FIG. 19

Device(100, 200)

| Communication unit (110)<br>(e.g., 5G communication unit) | Control unit (120)<br>(e.g., processor(s)) |
|---|---|
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 20

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

108    208

Device (100, 200)

Communication unit (210)

Control unit (220)

Memory unit (230)

Driving unit (140a)

Power supply unit (140b)

Sensor unit (140c)

Autonomous driving unit (140d)

# FIG. 21

# INTERNATIONAL SEARCH REPORT

International application No.

**PCT/KR2023/016870**

| A. | CLASSIFICATION OF SUBJECT MATTER |
|---|---|

**H04L 5/00**(2006.01)i; **H04W 72/21**(2023.01)i; **H04L 1/08**(2006.01)i; **H04L 1/18**(2006.01)i; **H04W 72/12**(2009.01)i

According to International Patent Classification (IPC) or to both national classification and IPC

| B. | FIELDS SEARCHED |
|---|---|

Minimum documentation searched (classification system followed by classification symbols)

H04L 5/00(2006.01); H04B 7/04(2006.01); H04L 1/00(2006.01); H04L 1/16(2006.01); H04W 24/00(2009.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: DCI, PUSCH, CW, UCI, 다중화(multiplex), MCS, 인덱스(index)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2013-0111939 A (SAMSUNG ELECTRONICS CO., LTD.) 11 October 2013 (2013-10-11)<br>See paragraphs [0038] and [0060]-[0069]; claim 1; and figure 7. | 1-15 |
| A | US 2011-0310855 A1 (YIN, Zhanping et al.) 22 December 2011 (2011-12-22)<br>See paragraphs [0045]-[0057] and [0111]; and figures 2-4. | 1-15 |
| A | EP 3487098 A1 (HUAWEI TECHNOLOGIES CO., LTD.) 22 May 2019 (2019-05-22)<br>See paragraphs [0010]-[0017]; and figures 1-2. | 1-15 |
| A | KR 10-2017-0102824 A (SAMSUNG ELECTRONICS CO., LTD.) 12 September 2017 (2017-09-12)<br>See paragraphs [0212]-[0222]; and figure 7. | 1-15 |
| A | US 2012-0113831 A1 (PELLETIER, Ghyslain et al.) 10 May 2012 (2012-05-10)<br>See claims 1-7. | 1-15 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **08 February 2024** | **08 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT | | International application No. |
|---|---|---|
| Information on patent family members | | **PCT/KR2023/016870** |

| Patent document cited in search report | | | Publication date (day/month/year) | Patent family member(s) | | | Publication date (day/month/year) |
|---|---|---|---|---|---|---|---|
| KR 10-2013-0111939 | A | | 11 October 2013 | AU | 2011-262642 | A1 | 13 December 2012 |
| | | | | AU | 2011-262642 | A8 | 14 February 2013 |
| | | | | AU | 2011-262642 | B2 | 20 November 2014 |
| | | | | CA | 2801007 | A1 | 15 December 2011 |
| | | | | CA | 2801007 | C | 05 January 2016 |
| | | | | CN | 103053121 | A | 17 April 2013 |
| | | | | CN | 103053121 | B | 05 August 2015 |
| | | | | CN | 104917557 | A | 16 September 2015 |
| | | | | CN | 104917557 | B | 04 January 2019 |
| | | | | EP | 2395693 | A2 | 14 December 2011 |
| | | | | EP | 2395693 | A3 | 08 February 2017 |
| | | | | EP | 2395693 | B1 | 01 March 2023 |
| | | | | JP | 2013-533678 | A | 22 August 2013 |
| | | | | JP | 2014-082774 | A | 08 May 2014 |
| | | | | JP | 2016-001924 | A | 07 January 2016 |
| | | | | JP | 2017-175631 | A | 28 September 2017 |
| | | | | JP | 2019-208220 | A | 05 December 2019 |
| | | | | JP | 5600207 | B2 | 01 October 2014 |
| | | | | JP | 6884174 | B2 | 09 June 2021 |
| | | | | RU | 2012157961 | A | 20 July 2014 |
| | | | | RU | 2014123522 | A | 20 December 2015 |
| | | | | RU | 2522307 | C1 | 10 July 2014 |
| | | | | US | 2011-0299500 | A1 | 08 December 2011 |
| | | | | US | 2014-0064242 | A1 | 06 March 2014 |
| | | | | US | 2015-0249984 | A1 | 03 September 2015 |
| | | | | US | 8605810 | B2 | 10 December 2013 |
| | | | | US | 9036739 | B2 | 19 May 2015 |
| | | | | US | 9986539 | B2 | 29 May 2018 |
| | | | | WO | 2011-155773 | A2 | 15 December 2011 |
| | | | | WO | 2011-155773 | A3 | 23 February 2012 |
| | | | | WO | 2011-155773 | A4 | 24 May 2012 |
| | | | | WO | 2011-155773 | A9 | 05 April 2012 |
| US 2011-0310855 | A1 | | 22 December 2011 | US | 8634345 | B2 | 21 January 2014 |
| | | | | WO | 2011-158968 | A1 | 22 December 2011 |
| EP 3487098 | A1 | | 22 May 2019 | AU | 2010-330533 | A1 | 05 July 2012 |
| | | | | AU | 2010-330533 | B2 | 23 January 2014 |
| | | | | AU | 2010-330533 | C1 | 10 July 2014 |
| | | | | AU | 2014-201180 | A1 | 27 March 2014 |
| | | | | AU | 2014-201180 | B2 | 05 March 2015 |
| | | | | AU | 2014-201180 | C1 | 04 June 2015 |
| | | | | BR | 112012014101 | A2 | 05 July 2016 |
| | | | | BR | 112012014101 | B1 | 19 March 2019 |
| | | | | CN | 102013938 | A | 13 April 2011 |
| | | | | CN | 102013938 | B | 04 July 2012 |
| | | | | EP | 2512053 | A1 | 17 October 2012 |
| | | | | EP | 2512053 | B1 | 02 December 2015 |
| | | | | EP | 2985940 | A1 | 17 February 2016 |
| | | | | EP | 2985940 | B1 | 22 March 2017 |
| | | | | EP | 3200373 | A1 | 02 August 2017 |
| | | | | EP | 3200373 | B1 | 20 February 2019 |

Form PCT/ISA/210 (patent family annex) (July 2022)

## INTERNATIONAL SEARCH REPORT
### Information on patent family members

| International application No. |
|---|
| **PCT/KR2023/016870** |

| Patent document cited in search report | | | Publication date (day/month/year) | Patent family member(s) | | | Publication date (day/month/year) |
|---|---|---|---|---|---|---|---|
| | | | | EP | 3487098 | B1 | 29 July 2020 |
| | | | | ES | 2561850 | T3 | 01 March 2016 |
| | | | | JP | 2013-513323 | A | 18 April 2013 |
| | | | | JP | 2015-008529 | A | 15 January 2015 |
| | | | | JP | 5616458 | B2 | 29 October 2014 |
| | | | | JP | 6108239 | B2 | 05 April 2017 |
| | | | | KR | 10-1420624 | B1 | 17 July 2014 |
| | | | | KR | 10-2012-0096556 | A | 30 August 2012 |
| | | | | TR | 201905645 | T4 | 21 May 2019 |
| | | | | US | 10749627 | B2 | 18 August 2020 |
| | | | | US | 2012-0243511 | A1 | 27 September 2012 |
| | | | | US | 2018-0026744 | A1 | 25 January 2018 |
| | | | | US | 9806850 | B2 | 31 October 2017 |
| | | | | WO | 2011-069436 | A1 | 16 June 2011 |
| KR | 10-2017-0102824 | A | 12 September 2017 | US | 10492213 | B2 | 26 November 2019 |
| | | | | US | 11089613 | B2 | 10 August 2021 |
| | | | | US | 11825510 | B2 | 21 November 2023 |
| | | | | US | 2019-0090258 | A1 | 21 March 2019 |
| | | | | US | 2020-0092899 | A1 | 19 March 2020 |
| | | | | US | 2021-0368520 | A1 | 25 November 2021 |
| | | | | WO | 2017-150925 | A1 | 08 September 2017 |
| US | 2012-0113831 | A1 | 10 May 2012 | BR | 112012007487 | A2 | 22 August 2017 |
| | | | | CN | 102577209 | A | 11 July 2012 |
| | | | | CN | 102577209 | B | 05 April 2017 |
| | | | | CN | 102812658 | A | 05 December 2012 |
| | | | | CN | 102812658 | B | 16 December 2015 |
| | | | | CN | 105450360 | A | 30 March 2016 |
| | | | | CN | 105450360 | B | 11 December 2018 |
| | | | | CN | 107104780 | A | 29 August 2017 |
| | | | | CN | 107104780 | B | 16 October 2020 |
| | | | | CN | 112202536 | A | 08 January 2021 |
| | | | | DK | 2484039 | T3 | 22 October 2018 |
| | | | | EP | 2484039 | A1 | 08 August 2012 |
| | | | | EP | 2484039 | B1 | 15 August 2018 |
| | | | | EP | 2522095 | A2 | 14 November 2012 |
| | | | | EP | 2765730 | A2 | 13 August 2014 |
| | | | | EP | 2765730 | A3 | 15 April 2015 |
| | | | | EP | 3267610 | A1 | 10 January 2018 |
| | | | | EP | 3267610 | B1 | 08 April 2020 |
| | | | | EP | 3691172 | A1 | 05 August 2020 |
| | | | | EP | 3691172 | B1 | 06 December 2023 |
| | | | | ES | 2694076 | T3 | 17 December 2018 |
| | | | | ES | 2797083 | T3 | 01 December 2020 |
| | | | | IL | 220821 | A | 30 August 2012 |
| | | | | IL | 220821 | B | 31 October 2016 |
| | | | | IL | 220821 | D0 | 30 August 2012 |
| | | | | JP | 2013-507067 | A | 28 February 2013 |
| | | | | JP | 2013-516921 | A | 13 May 2013 |
| | | | | JP | 2015-092716 | A | 14 May 2015 |
| | | | | JP | 2016-208553 | A | 08 December 2016 |

Form PCT/ISA/210 (patent family annex) (July 2022)

## INTERNATIONAL SEARCH REPORT
### Information on patent family members

| International application No. |
|---|
| **PCT/KR2023/016870** |

| Patent document cited in search report | Publication date (day/month/year) | Patent family member(s) | | | Publication date (day/month/year) |
|---|---|---|---|---|---|
| | | JP | 2017-022726 | A | 26 January 2017 |
| | | JP | 2019-216463 | A | 19 December 2019 |
| | | JP | 5993740 | B2 | 14 September 2016 |
| | | JP | 6007236 | B2 | 12 October 2016 |
| | | JP | 6310019 | B2 | 11 April 2018 |
| | | JP | 6765261 | B2 | 07 October 2020 |
| | | JP | 6851440 | B2 | 31 March 2021 |
| | | KR | 10-1521001 | B1 | 15 May 2015 |
| | | KR | 10-1695055 | B1 | 10 January 2017 |
| | | KR | 10-1838284 | B1 | 13 March 2018 |
| | | KR | 10-1897448 | B1 | 08 October 2018 |
| | | KR | 10-2012-0093912 | A | 23 August 2012 |
| | | KR | 10-2015-0028365 | A | 13 March 2015 |
| | | MY | 162196 | A | 31 May 2017 |
| | | PL | 2484039 | T3 | 31 January 2019 |
| | | RU | 2012117218 | A | 10 November 2013 |
| | | RU | 2557164 | C2 | 20 July 2015 |
| | | TW | 201114302 | A | 16 April 2011 |
| | | TW | 201138358 | A | 01 November 2011 |
| | | TW | 201145894 | A | 16 December 2011 |
| | | TW | 201208327 | A | 16 February 2012 |
| | | TW | 201635745 | A | 01 October 2016 |
| | | TW | 201642614 | A | 01 December 2016 |
| | | TW | I544760 | B | 01 August 2016 |
| | | TW | I545912 | B | 11 August 2016 |
| | | TW | I628933 | B | 01 July 2018 |
| | | US | 10039087 | B2 | 31 July 2018 |
| | | US | 10123343 | B2 | 06 November 2018 |
| | | US | 10368342 | B2 | 30 July 2019 |
| | | US | 10904869 | B2 | 26 January 2021 |
| | | US | 10904895 | B2 | 26 January 2021 |
| | | US | 11743898 | B2 | 29 August 2023 |
| | | US | 2011-0205981 | A1 | 25 August 2011 |
| | | US | 2011-0243066 | A1 | 06 October 2011 |
| | | US | 2011-0249578 | A1 | 13 October 2011 |
| | | US | 2017-0013612 | A1 | 12 January 2017 |
| | | US | 2017-0156152 | A1 | 01 June 2017 |
| | | US | 2017-0245262 | A1 | 24 August 2017 |
| | | US | 2018-0302896 | A1 | 18 October 2018 |
| | | US | 2019-0141722 | A1 | 09 May 2019 |
| | | US | 2019-0349918 | A1 | 14 November 2019 |
| | | US | 2021-0029694 | A1 | 28 January 2021 |
| | | US | 9391736 | B2 | 12 July 2016 |
| | | US | 9485060 | B2 | 01 November 2016 |
| | | US | 9967866 | B2 | 08 May 2018 |
| | | WO | 2011-019795 | A1 | 17 February 2011 |
| | | WO | 2011-041623 | A1 | 07 April 2011 |
| | | WO | 2011-085230 | A2 | 14 July 2011 |
| | | WO | 2011-085230 | A3 | 01 September 2011 |
| | | WO | 2011-137408 | A2 | 03 November 2011 |

Form PCT/ISA/210 (patent family annex) (July 2022)

**INTERNATIONAL SEARCH REPORT**
Information on patent family members

International application No.

**PCT/KR2023/016870**

| Patent document cited in search report | Publication date (day/month/year) | Patent family member(s) | | Publication date (day/month/year) |
|---|---|---|---|---|
| | | WO 2011-137408 A3 | | 19 January 2012 |

Form PCT/ISA/210 (patent family annex) (July 2022)

45